# EUROPÄISCHE PATENTSCHRIFT

(11) **EP 2 343 493 B1**
(45) Veröffentlichungstag und Bekanntmachung des Hinweises auf die Patenterteilung: **18.01.2012**
(21) Anmeldenummer: 10196280.1
(22) Anmeldetag: 21.12.2010
(51) Int. Cl.: G01B 5/012, G01B 7/012

(54) **Taststift und Tastkopf für ein Koordinatenmessgerät**
Stylus and sensor head for a coordinate measuring device
Stylet et tête de palpage pour un appareil de mesure de coordonnées

(30) Priorität: 22.12.2009 DE 102009060784
(43) Veröffentlichungstag der Anmeldung: 13.07.2011
(73) Patentinhaber: Carl Zeiss Industrielle Messtechnik GmbH, 73447 Oberkochen (DE); Carl Zeiss 3D Automation GmbH, 73447 Oberkochen (DE)
(72) Erfinder: Engel, Thomas, 73432 Aalen (DE); Richter, Frank, 89522 Heidenheim (DE)
(74) Vertreter: Witte, Weller & Partner

(56) Entgegenhaltungen:
- EP-A2- 1 643 208
- US-A1- 2004 185 706
- US-A1- 2008 052 936

## Beschreibung

Die vorliegende Erfindung betrifft einen Taststift für ein Koordinatenmessgerät, mit einem ein erstes Ende und ein zweites Ende aufweisenden Schaft, einer Befestigungshülse zum Befestigen des Taststifts in einer Taststiftaufnahme, und einer Identifikationseinrichtung zur Identifikation des Taststifts, wobei an dem ersten Ende des Schafts ein Tastobjekt vorgesehen ist und wobei die Identifikationseinrichtung über einen ersten Kontakt und einen zweiten Kontakt auslesbar ist.

Des Weiteren betrifft die vorliegende Erfindung einen Tastkopf zur Aufnahme mindestens eines Taststifts, mit mindestens einer Befestigungsgegeneinrichtung zur Aufnahme einer Befestigungshülse des Taststifts, und mindestens einem jeweils einen ersten Gegenkontakt und einen zweiten Gegenkontakt aufweisenden Paar von Gegenkontakten.

Ein derartiger Taststift und ein derartiger Tastkopf sind bspw. aus der Druckschrift US 2008/0052936 A1 bekannt.

Koordinatenmessgeräte sind im Stand der Technik allgemein bekannt. Sie dienen zur Vermessung von Prüfobjekten, bspw. in der Qualitätssicherung. Grundsätzlich können zur Erfassung der Koordinaten des Prüfobjekts verschiedene Sensorsysteme verwendet werden. Üblich sind etwa optische Sensoren, insbesondere aber auch taktile Sensoren, die ausgewählte Punkte des Prüfobjekts antasten und die Koordinaten des angetasteten Punktes bestimmen.

Hierzu weist ein Koordinatenmessgerät einen Tastkopf auf, in dem sich eine Sensoranordnung befindet, die eine Auslenkung eines Taststifts, der das Prüfobjekt mit einem Tastobjekt antastet, erfassen kann. Mittels vorher bestimmter Kalibrierungsdaten lassen sich aus den Sensorsignalen die Position des Tastobjekts relativ zu dem Tastkopf und aufgrund der bekannten Position des Tastkopfs in dem Koordinatenmessgerät auch die Koordinaten des angetasteten Punktes ermitteln.

Abhängig von der Geometrie des Prüfobjekts kann es unter Umständen notwendig sein, den Taststift während eines Prüfvorgangs zu wechseln. Bspw. kann es notwendig sein, einen Taststift zu verwenden, der dünner, dicker oder gewinkelt ist oder aber ein Tastobjekt mit einer anderen Form aufweist. Die Tastobjekte können bspw. als Kugel oder aber auch als Zylinder ausgebildet sein.

Bei einem Wechsel des Taststifts musste bisher jedes Mal eine erneute Kalibrierung des Taststifts bzw. des Koordinatenmessgeräts erfolgen, um aus den Sensorsignalen exakt auf die Koordinaten des abgetasteten Punktes schließen zu können. Im Stand der Technik sind jedoch auch Verfahren vorgeschlagen worden, um die Kalibrierungsdaten eines bestimmten Taststifts vorab zu errechnen und in dem Koordinatenmessgerät zu speichern. Greift das Koordinatenmessgerät dann später auf diesen Taststift zurück, kann ohne erneute Kalibrierung auf diese Kalibrierungsdaten zurückgegriffen werden.

Hierfür ist es jedoch notwendig, dass das Koordinatenmessgerät den verwendeten Taststift eindeutig identifizieren kann. Hierzu wurde in der eingangs genannten Druckschrift US 2008/0052936 A1 vorgeschlagen, den Taststift mit einem Identifikations-Chip zu versehen, der über den Tastkopf ausgelesen werden kann. In dem Identifikations-Chip sind dazu Daten abgelegt, über die der Taststift eindeutig identifiziert werden kann.

Zur Verwendung des Identifikations-Chips mit dem Koordinatenmessgerät werden im Stand der Technik sowohl drahtlose als auch drahtgebundene Verbindungsmöglichkeiten angegeben.

So zeigt bspw. die Druckschrift DE 10 2006 033 443 A1 einen Taststift mit integriertem RFID-Chip zur drahtlosen Verbindung des als RFID-Chip ausgestalteten Identifikations-Chips mit dem Koordinatenmessgerät. Derartige drahtlose Verbindungsmethoden erfordern jedoch eine autarke Energieversorgung innerhalb des Taststifts, bspw. mittels einer Batterie.

Bei drahtgebundenen Identifikations-Chips besteht die Möglichkeit, diesen über die Verbindung in einen Schaltkreis einzubinden und so ohne eigene Energieversorgung auszulesen. Hierzu kann der Identifikations-Chip etwa als Read-Only-Memory ausgestaltet sein, der einmal beschrieben auch ohne Energieversorgung die gespeicherten Daten erhält. Hierfür sind jedoch geeignete Kontakte bereitzustellen. Dabei ist zu beachten, dass ein etwaiger Stromfluss die Messergebnisse nicht verfälscht.

Die Druckschrift EP 1 643 208 A2 schlägt vor, die Kontakte über die Lager des Taststifttellers in dem Tastkopf bereitzustellen.

Ein Taststift weist in der Regel eine Befestigungshülse auf, die insbesondere ein Außengewinde aufweisen kann. Mittels dieser Befestigungshülse wird der Taststift in den Tastkopf eingeschraubt. Abhängig von dem verwendeten Tastkopf kann hierzu ein besonderer Gewindedurchmesser notwendig sein. Da die Taststifte aber in der Regel gleich sind, werden daher Taststifte gleicher Bauart mit unterschiedlichen Befestigungshülsen bereitgestellt, die sich nach Befestigungsart und Dimensionierung voneinander unterscheiden können.

Um die Produktion derartiger Taststifte zu vereinfachen, wurde vorgeschlagen, einen Schaft des Taststifts, der das Tastobjekt, bspw. eine Tastkugel, trägt, mittels eines Spritzgussverfahrens mit der Befestigungshülse zu verbinden. Der eingespritzte Kunststoff isoliert dabei die Befestigungshülse und den Schaft elektrisch voneinander, so dass neue Möglichkeiten und Anforderungen entstehen, einen derartigen Taststift, der einen Identifikations-Chip aufweist, mit Kontakten zu versehen.

Des Weiteren weisen bspw. die in der eingangs genannten US 2008/0052936 A1 gezeigten Kontakte eine bestimmte Orientierung auf, die zur sicheren Kontaktherstellung einzuhalten ist. Deswegen ist in dieser Druckschrift ein Zapfen vorgeschlagen, der in einer bestimmten Orientierung einrastet und so die sichere Kontaktierung des Taststifts in dem Tastkopf gewährleistet. Somit ist eine sichere Kontaktierung nur in einer bestimmten relativen Lage des Taststifts zu dem Tastkopf gegeben.

Es ist daher eine Aufgabe der vorliegenden Erfindung, einen Taststift und einen Tastkopf anzugeben, die eine konstruktiv einfache und zuverlässige Kontaktierung des Identifikations-Chips ermöglichen, um diesen auszulesen.

Gemäß einem ersten Aspekt der Erfindung ist daher vorgesehen, den eingangs genannten Taststift dahingehend weiterzubilden, dass das zweite Ende des Schafts und die Befestigungshülse durch einen Kunststoffabschnitt verbunden sind, wobei der erste Kontakt mittels der Befestigungshülse bereitgestellt ist und der zweite Kontakt mittels einer rotationssymmetrischen, durch den Kunststoffabschnitt von der Befestigungshülse elektrisch isolierten Kontakteinrichtung bereitgestellt ist.

Auf diese Weise wird erreicht, dass auch bei Taststiften, bei denen der Kunststoffabschnitt bspw. mittels eines Spritzgussverfahrens zum Verbinden der Befestigungshülse mit dem Schaft hergestellt wurde, die gewünschte Kontaktierung der Identifikationseinrichtung möglich ist. Des Weiteren ist keine bestimmte Orientierung des Taststifts in der Taststiftaufnahme notwendig, um den ersten Kontakt und den zweiten Kontakt zu schließen. Da der erste Kontakt mittels der dem Schaft auf dem gesamten Umfang umgebenden Befestigungshülse bereitgestellt ist und der zweite Kontakt rotationssymmetrisch durch die Kontakteinrichtung bereitgestellt ist, ist ein sicherer Kontakt in jeder Orientierung bereitgestellt.

Gemäß einem zweiten Aspekt der Erfindung wird vorgeschlagen, den eingangs genannten Tastkopf dahingehend weiterzubilden, dass der erste Gegenkontakt durch die Befestigungsgegeneinrichtung gebildet ist und der zweite Gegenkontakt zur Kontaktierung einer rotationssymmetrischen Kontakteinrichtung des Taststifts ausgebildet ist.

Auf diese Weise bildet der Tastkopf gemäß dem zweiten Aspekt der Erfindung ein entsprechendes Gegenelement zu dem Taststift gemäß dem ersten Aspekt der Erfindung, das dazu ausgelegt ist, einen Taststift gemäß dem ersten Aspekt der Erfindung aufzunehmen.

Auf diese Weise wird eine eindeutige Erkennung eines Taststifts möglich und das Koordinatenmessgerät kann automatisch feststellen, ob ein Taststift gewechselt wurde.

Die eingangs gestellte Aufgabe wird somit vollkommen gelöst.

In einer Ausführungsform der Erfindung kann vorgesehen sein, dass die Kontakteinrichtung durch ein Schaftende des Schafts gebildet ist, wobei das Schaftende den Kunststoffabschnitt durchdringt.

Der Kunststoffabschnitt bildet somit in einem ausgehärteten Zustand eine Hülse, die den Schaft umschließt und zwischen dem Schaft und der Befestigungshülse angeordnet ist. Der Schaft bzw. ein Kopfende des Schafts kann jedoch kontaktiert werden, so dass dieses Schaftende die Kontakteinrichtung bereitstellt, die den zweiten Kontakt bildet.

Auf diese Weise wird eine erste Möglichkeit geschaffen, die Kontakteinrichtung bereitzustellen.

In einer alternativen weiteren Ausführungsform weist der Kunststoffabschnitt zumindest teilweise eine elektrisch leitende Beschichtung auf, die die Kontakteinrichtung bildet.

In der Spritzgusstechnik können Kunststoffe verarbeitet werden, die nachträglich mit einem Laser aktiviert und metallisch beschichtet werden können. Auf diese Weise ist es möglich, in dem Kunststoffabschnitt des Taststifts eine leitfähige Struktur aufzubringen, die dann die Kontakteinrichtung bildet.

In beiden Ausführungsformen ist die Identifikationseinrichtung derart ausgebildet, dass sie mit dem ersten Kontakt und dem zweiten Kontakt verbunden ist, um über den ersten Kontakt und den zweiten Kontakt ausgelesen zu werden.

Insbesondere kann vorgesehen sein, dass die Beschichtung ringförmig ausgebildet ist. Auf diese Weise wird die geforderte Rotationssymmetrie der Kontakteinrichtung besonders einfach bereitgestellt.

Es kann vorgesehen sein, dass die Befestigungshülse eine Gewindehülse ist. Mittels einer Gewindehülse kann der Taststift einfach in ein entsprechendes Gegengewinde eines Tastkopfs eingeschraubt werden. Gleichzeitig kann ein erster Kontakt bereitgestellt werden.

Bei dem Tastkopf gemäß dem zweiten Aspekt der Erfindung kann in vorteilhafter Weiterbildung vorgesehen sein, dass der zweite Gegenkontakt zur Kontaktierung der rotationssymmetrischen Kontakteinrichtung des Taststifts ein Federstift ist.

Der Federstift ist entsprechend in Richtung eines in den Tastkopf aufgenommenen Taststifts vorgespannt, so dass der Federstift gegen die Kontakteinrichtung gedrückt wird.

Es kann vorgesehen sein, dass der Tastkopf zur Aufnahme von mehr als einem Taststift ausgebildet ist und mehr als ein Paar von Gegenkontakten vorgesehen ist, weil jedem Paar von Gegenkontakten eine Positionsmarkierungseinrichtung zugeordnet ist, die zusammen mit einer jeweiligen Identifikationseinrichtung eines Taststifts auslesbar ist.

Tastköpfe, die mehrere Taststifte aufnehmen können, sind häufig an Koordinatenmessgeräten vorgesehen. Selbstverständlich ist in diesem Fall nicht nur gefordert, dass ein Taststift an sich mittels der Identifikationseinrichtung erkannt werden kann, sondern es muss auch erkannt werden können, wo der jeweilige Taststift in dem Tastkopf aufgenommen ist. Daher weist jede Taststiftaufnahme des Tastkopfs eine Positionsmarkierung auf, die bspw. in Serie mit einem der Gegenkontakte geschaltet sein kann, so dass sie zusammen mit der Identifikationseinrichtung ausgelesen und eine entsprechende Verknüpfung zwischen einem bestimmten Taststift, der anhand der Identifikationseinrichtung erkannt wurde, und einer jeweiligen Taststiftaufnahme, die an der jeweiligen Positionsmarkierungseinrichtung erkannt wurde, hergestellt werden kann. In einer Weiterbildung kann vorgesehen sein, dass eine Übertragung der Informationen von derartig verknüpften Identifikationseinrichtungen und Positionsmarkierungseinrichtungen drahtlos an das Koordinatenmessgerät bzw. eine Datenverarbeitungseinheit des Koordinatenmessgeräts erfolgt. In diesem Fall besteht dann zwischen der Identifikationseinrichtung und der Positionsmarkierungseinrichtung eine drahtgebundene Verbindung, wobei der so hergestellte Schaltkreis wiederum drahtlos mit dem Koordinatenmessgerät bzw. einer Datenverarbeitungseinheit des Koordinatenmessgeräts verbunden ist. In einer Weiterbildung kann auch die Verbindung zwischen der Identifikationseinrichtung und der Positionsmarkierungseinrichtung drahtlos ausgeführt sein, etwa mittels geeigneter RFID-Chips. Die weitere Übertragung zu dem Koordinatenmessgerät bzw. einer Datenverarbeitungseinheit des Koordinatenmessgeräts kann dann ebenfalls drahtlos oder drahtgebunden ausgeführt sein.

Es kann vorgesehen sein, dass ein Schalter vorgesehen ist, um wahlweise eine Positionsmarkierungseinrichtung und eine Identifikationseinrichtung auszulesen.

Sind mehrere Taststifte in dem Tastkopf aufgenommen, ist ein gleichzeitiges Auslesen aller Identifikationseinrichtungen und Positionsmarkierungseinrichtungen, bspw. indem eine Serienschaltung über alle Identifikationseinrichtungen und Positionsmarkierungseinrichtungen geschaltet wird, nicht mehr möglich. Entsprechend ist ein Schalter vorgesehen, der wahlweise eine Taststiftaufnahme bzw. eine entsprechende Positionsmarkierungseinrichtung und eine Identifikationseinrichtung des in der Taststiftaufnahme aufgenommenen Taststifts auslesen kann. Es kann in einer Weiterbildung vorgesehen sein, dass der Schalter in bestimmten Zeitintervallen automatisch schaltet, um bspw. aufeinanderfolgend alle Identifikationseinrichtungen und Positionsmarkierungseinrichtungen eindeutig auszulesen. Alternativ ist auch ein verzweigtes Schaltungssystem denkbar, dass ein Auslesen aller Identifikationseinrichtungen und Positionsmarkierungseinrichtungen möglich ist.

Es kann auch vorgesehen sein, dass die mindestens eine Befestigungsgegeneinrichtung verschwenkbar ist, um wahlweise eine Positionsmarkierungseinrichtung und eine Identifikationseinrichtung auszulesen.

Entsprechend werden dann an dem Tastkopf die Verschaltungen entsprechend so gelegt, dass jeweils nur ein Taststift ausgelesen wird, der sich in einer bestimmten Position, bspw. einer Messposition, befindet. Die übrigen Taststifte befinden sich dann lediglich in einer Warteposition, in der sie nicht ausgelesen werden. Durch Verschwenkung der Taststiftaufnahmen wird dann ein anderer Taststift in die Messposition verschwenkt, so dass automatisch dieser ausgelesen wird. Hierzu sind verschiedene Arten von Magazinen denkbar, bspw. ein Revolvermagazin.

Die in der Identifikationseinrichtung gespeicherten Daten können sämtliche Daten umfassen, die geeignet sind, Eigenschaften des Taststifts zu beschreiben. Neben einer Seriennummer, Materialdaten und Daten bezüglich der Fertigung können darüber hinaus Nachgiebigkeitsmatrizen, Eigengewichtsmatrizen und andere, für die Kalibrierung des Taststifts notwendigen Daten abgelegt werden. Da oftmals nur wenig Speicherplatz in den Identifikationseinrichtungen vorhanden ist, kann auch vorgesehen sein, dass die Identifikationseinrichtung eine Information über den Speicherort bzw. Verzeichnisort enthält, in dem dann die voranstehend genannten Daten abgelegt sind.

Ausführungsbeispiele der Erfindung sind in der Zeichnung dargestellt und werden in der nachfolgenden Beschreibung näher erläutert. Es zeigen:
- Fig. 1: eine schematische Perspektivansicht eines Koordinatenmessgeräts;
- Fig. 2: eine schematische Querschnittsansicht eines Taststifts gemäß einem ersten Aspekt der Erfindung und eines Tastkopfs gemäß einem zweiten Aspekt der Erfindung, wobei der Taststift und der Tastkopf in einer ers- ten Ausführungsform der Erfindung dargestellt sind;
- Fig. 3: einen Taststift gemäß dem ersten Aspekt der Erfindung und den Tast- kopf gemäß dem zweiten Aspekt der Erfindung, wobei der Taststift und der Tastkopf in einer zweiten Ausführungsform der Erfindung darge- stellt sind;
- Fig. 4: eine schematische Draufsicht auf einen Tastkopf gemäß einer weiteren Ausführungsform der Erfindung; und
- Fig. 5: eine schematische Draufsicht auf einen Tastkopf gemäß noch einer weiteren Ausführungsform der Erfindung.

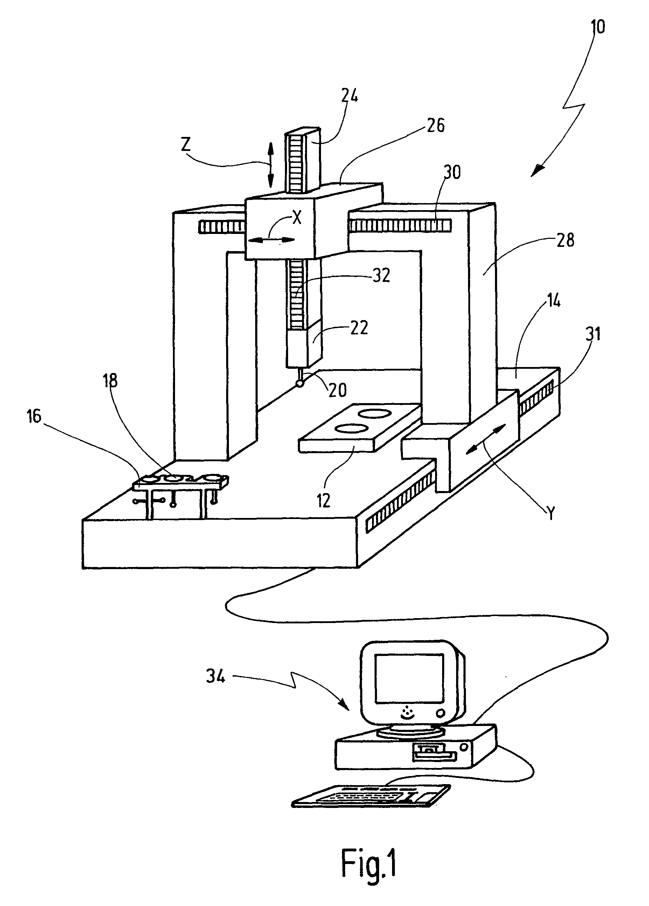

Fig. 1 zeigt eine schematische Ansicht eines Koordinatenmessgeräts 10. Das Koordinatenmessgerät 10 dient zur Vermessung eines Prüfobjekts 12, das auf einer Grundplatte 14 des Koordinatenmessgeräts 10 angeordnet ist.

An der Grundplatte 14 kann ein Magazin 16 zum Aufbewahren mehrerer Austauschtaststifte 18 vorgesehen sein. Es kann vorgesehen sein, dass das Koordinatenmessgerät 10 aus dem Magazin wahlweise Austauschtaststifte 18 entnehmen kann.

An dem Koordinatenmessgerät 10 ist ein Taststift 20 angeordnet, der zu einer Vermessung des Werkstücks 12 dient. Entsprechend kann das Koordinatenmessgerät 10 den Taststift 20 auch wahlweise in dem Magazin 16 ablegen und einen der Austauschtaststifte 18 entnehmen.

Der Taststift 20 ist in einem Tastkopf 22 angeordnet. Üblicherweise ist dies mittels einer Sensoranordnung realisiert, wie sie bspw. in der Druckschrift DE 10 2004 011 728 A1 beschrieben ist. Mittels der Sensoranordnung kann eine Auslenkung des Taststifts 20 relativ zu dem Tastkopf 22 erfasst werden.

Der Tastkopf 22 ist an einer Pinole 24 befestigt. Die Pinole 24 ist verschiebbar in einem Schlitten 26 gelagert, der wiederum verschiebbar an einem Portal 28 gelagert ist. Die Pinole 24 ist in dem Schlitten 26 in Z-Richtung verschiebbar. Der Schlitten 26 ist an dem Portal 28 in X-Richtung verschiebbar. Das Portal 28 ist an der Grundplatte 14 in Y-Richtung verschiebbar. Der Taststift 20 lässt sich so dreidimensional in einer gewünschten Richtung zur Antastung des Prüfobjekts 12 bewegen.

Wie bereits voranstehend ausgeführt wurde, ist die relative Lage des Taststifts 20 in dem Tastkopf 22 mittels der Sensoranordnung (nicht dargestellt) des Tastkopfs 22 bestimmbar. Die Lage des Tastkopfs 22 ist anhand von einer Skala 30 in X-Richtung, einer Skala 31 in Y-Richtung und einer Skala 32 in Z-Richtung ablesbar. In der Regel erfolgt die Ablesung von den Skalen elektronisch mittels einer geeigneten Sensoreinrichtung, die dazu in der Lage ist, die Skalen 30, 31, 32 abzutasten.

Des Weiteren ist eine Datenverarbeitungseinheit 34 vorgesehen, die dazu in der Lage ist, sämtliche von dem Koordinatenmessgerät 10 erfassten Daten aufzunehmen, ggf. zu speichern und auszuwerten. Die Datenverarbeitungseinheit 34 nimmt auch sämtliche Kalibrationsvorgänge vor und dient auch zur Steuerung des Koordinatenmessgeräts 10.

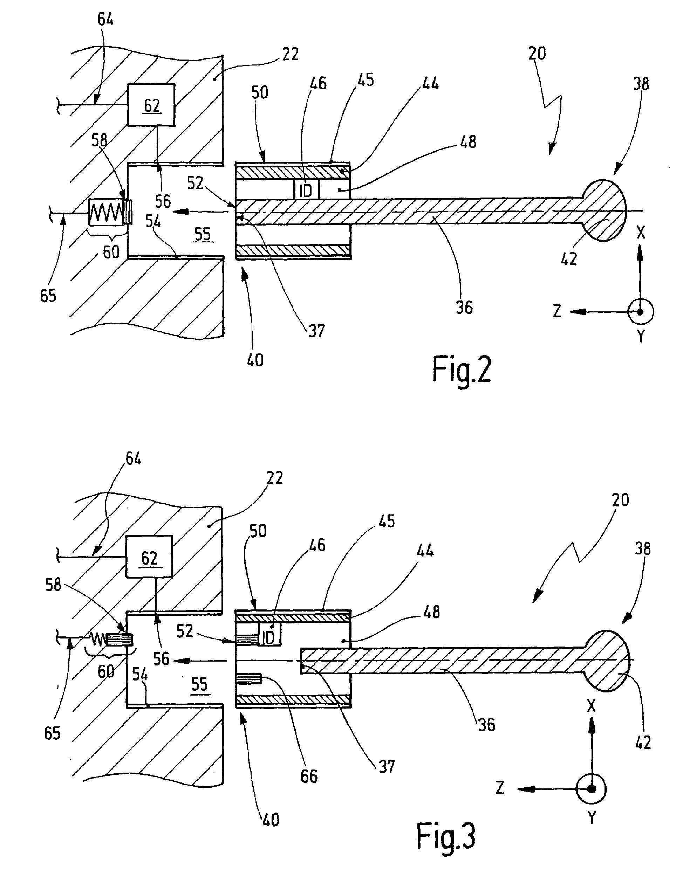

Fig. 2 zeigt den Taststift 20 gemäß einer ersten Ausführungsform. Entsprechend ist auch der Tastkopf 22 in einer ersten Ausführungsform dargestellt.

Der Taststift 20 weist einen Schaft 36 auf, wobei der Schaft 36 ein Schaftende 37 aufweist.

Das Schaftende 37 liegt entgegengesetzt zu einem ersten Ende 38 des Taststifts 20 an einem zweiten Ende 40 des Taststifts 20.

An dem ersten Ende 38 des Taststifts 20 ist ein Tastobjekt 42 vorgesehen. Bei dem Tastobjekt 42 kann es sich bspw. um eine Kugel handeln.

Der Taststift 20 weist des Weiteren eine Befestigungshülse 44 auf, die dazu vorgesehen ist, den Taststift 20 in dem Tastkopf 22 zu befestigen. Die Befestigungshülse 44 ist als Gewindehülse ausgebildet und weist ein Gewinde 45 auf. Mittels des Gewindes 45 kann der Taststift 20 in den Tastkopf 22 geschraubt werden.

Des weiteren weist der Taststift 20 eine Identifikationseinrichtung 46 auf, die zur eindeutigen Identifizierung des Taststifts 20 dient. Die Identifikationseinrichtung 46 steht in leitendem Kontakt mit dem Schaft 36 und der Befestigungshülse 44

Um den Schaft mit der Befestigungshülse 44 zu verbinden, ist ein Kunststoffabschnitt 48 vorgesehen, der durch ein Spritzgussverfahren bereitgestellt ist. Auf diese Weise kann der Schaft 36 einfach auf elektrisch isolierende Weise mit der Befestigungshülse 44 verbunden werden und auch die Identifikationseinrichtung 46 sicher an ihrem Platz festgelegt werden.

Zum Auslesen der Identifikationseinrichtung 46 wird somit ein erster Kontakt 50 durch das Gewinde 45 der Befestigungshülse 44 bereitgestellt. Ein zweiter Kontakt 52 zum Auslesen der Identifikationseinrichtung 46 wird durch das Schaftende 37 des Schafts 36 bereitgestellt.

Der Tastkopf 22 weist ein Innengewinde 54 in einer Taststiftaufnahme 55 auf. Das Innengewinde 54 kann mit dem Gewinde 45 des Taststifts 20 verschraubt werden.

Auf diese Weise wird durch die Verschraubung des Innengewindes 54 mit dem Gewinde 45 der erste Kontakt 50 hergestellt.

Das Innengewinde 54 bildet somit einen ersten Gegenkontakt 56 des Tastkopfs 22 aus.

Ein zweiter Gegenkontakt 58 des Tastkopfs 22 ist durch einen Federstift 60 bereitgestellt. Wird der Taststift 20 mit dem Tastkopf 22 verschraubt, so gelangt das Schaftende 37 mit dem Federstift 60 in Anlage, wobei der Federstift gegen das zweite Schaftende 37 gedrückt wird. Auf diese Weise ist zwischen dem Federstift 60 und dem Schaftende 37 die Verbindung zwischen dem zweiten Kontakt 52 und dem zweiten Gegenkontakt 58 hergestellt.

Somit kann die Identifikationseinheit 46 bspw. von der Datenverarbeitungseinheit 34 ausgelesen werden, wenn der Taststift 20 in die Taststiftaufnahme 55 geschraubt ist.

In dem Tastkopf 22 kann des Weiteren eine Positionsmarkierungseinrichtung 62 vorgesehen sein, die zusammen mit der Identifikationseinrichtung 46 ausgelesen werden kann. Die Positionsmarkierungseinrichtung 62 dient dazu, die Taststiftaufnahme 55 eindeutig zu kennzeichnen. Falls mehrere Taststiftaufnahmen 55 in dem Tastkopf 22 vorgesehen sind, kann so nicht nur der Taststift 20 mittels der Identifikationseinrichtung 46 eindeutig erkannt werden, sondern der Taststift 20 kann auch eindeutig einer bestimmten Taststiftaufnahme 55 anhand der Positionsmarkierungseinrichtung 62 zugeordnet werden.

Zur Weiterführung des ersten Gegenkontakts 56 und des zweiten Gegenkontakts 58 sind Leitungen 64, 65 vorgesehen, die eine Verbindung zum übrigen Koordinatenmessgerät 10 und insbesondere zu der Datenverarbeitungseinrichtung 34 bereitstellen.

Fig. 3 zeigt eine alternative Ausführungsform des Taststifts 20 und des Tastkopfs 22.

In dieser Ausführungsform ist der erste Kontakt 50 nicht durch das Schaftende 37 des Schafts 36 gebildet, sondern der zweite Kontakt 52 wird durch eine ringförmige Beschichtung 66 des Kunststoffabschnitts 48 bereitgestellt. Das Schaftende 37 durchdringt den Kunststoffabschnitt in diesem Fall somit nicht, das heißt, das Schaftende 37 tritt nicht in Richtung der Taststiftaufnahme 55 aus dem Kunststoffabschnitt 48 heraus.

Der zweite Gegenkontakt 58 wird erneut über einen Federstift 60 bereitgestellt.

Durch die in Figuren 2 und 3 dargestellten Ausführungsformen kann insbesondere erreicht werden, dass sowohl der erste Kontakt 50 als auch der zweite Kontakt 52 unabhängig von einer Drehposition bzw. Winkelposition des Taststifts 20 hergestellt werden. Sowohl der erste Kontakt 50 als auch der zweite Kontakt 52 sind rotationssymmetrisch ausgebildet, so dass sie in jedem Fall in Verbindung mit dem ersten Gegenkontakt 56 und dem zweiten Gegenkontakt 58 treten, wenn der Taststift weit genug in die Taststiftaufnahme 55 eingeschraubt ist.

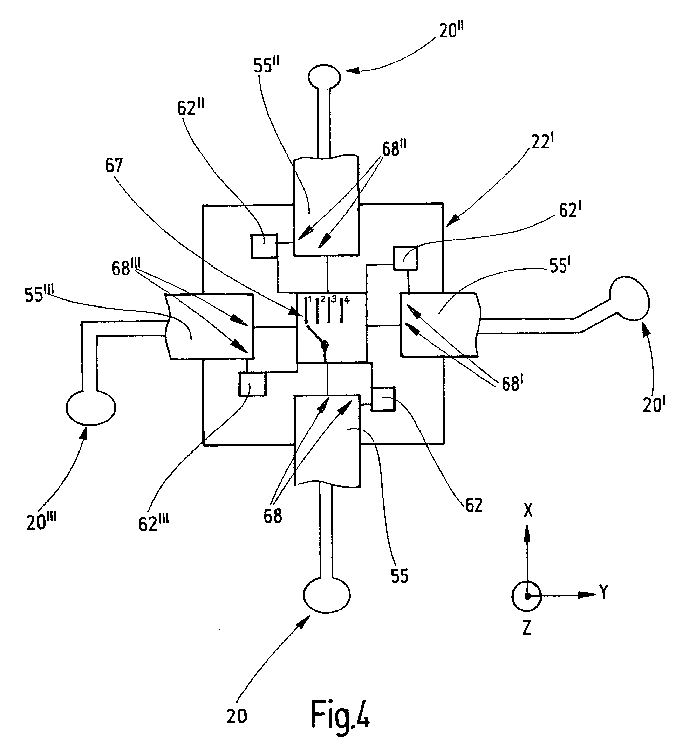

Fig. 4 zeigt einen Tastkopf 22', der zur Aufnahme von vier Taststiften 20, 20', 20", 20'" ausgebildet ist. Eine Verbindung zwischen einem der Taststifte 20, 20', 20", 20"' und dem Tastkopf 22' ist jeweils wie in Fig. 2 oder Fig. 4 dargestellt ausgeführt.

Um jeweils eine Identifikationseinrichtung 46 eines der Taststifte 20, 20', 20", 20'" auszulesen, ist ein Vierfachschalter 67 vorgesehen, mit dem wahlweise eine der Identifikationseinrichtungen 46 ausgelesen werden kann. Entsprechend kann entweder ein erstes Paar von Gegenkontakten 68, das den ersten Gegenkontakt 56 und dem zweiten Gegenkontakt 58 aufweist, geschaltet werden, oder aber eines der anderen Paare von Gegenkontakten 68', 68", 68"'.

Entsprechend sind auch vier Positionsmarkierungseinrichtungen 62, 62', 62", 62'" vorgesehen, die jeweils einer Taststiftaufnahme 55, 55', 55", 55"' zugeordnet sind. Die Positionsmarkierungseinrichtungen 62, 62', 62", 62'" können zusammen mit den Identifikationseinrichtungen 46 ausgelesen werden, so dass ein Taststift 20, 20', 20", 20'" eindeutig einer der Taststiftaufnahmen 55, 55', 55", 55"' zugeordnet werden kann.

Es kann bspw. vorgesehen sein, dass der Schalter 67 automatisch in gewissen Zeitintervallen geschaltet wird, so dass die Positionsmarkierungseinrichtungen 62, 62', 62", 62'" und die entsprechenden Identifikationsmarkierungen 46 aufeinanderfolgend immer wieder ausgelesen werden.

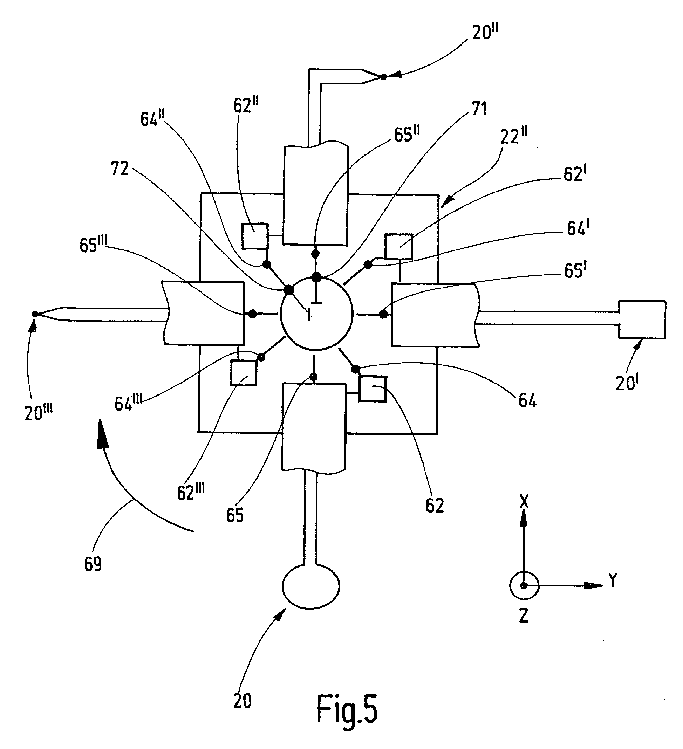

In Fig. 5 ist eine weitere Ausführungsform eines Tastkopfs 22" dargestellt. Auf dem Tastkopf 22" ist zur Aufnahme von mehreren Taststiften 20, 20', 20", 20'" ausgebildet. Er weist jedoch keinen Schalter 67 auf. Stattdessen ist der Tastkopf 22" in einer Drehrichtung 69 schwenkbar. Es sind zwei Rastkontakte 71, 72 vorgesehen, die eine Verbindung zu einem jeweiligen ersten Gegenkontakt 56 bzw. zweiten Gegenkontakt 58 über die Leitungen 64, 64', 64", 64'" bzw. 65, 65', 65", 65"' herstellen. Wird der Tastkopf 22" in die Drehrichtung 69 verschwenkt, greifen die Rastkontakte 71, 72 mit einem anderen Leitungspaar ineinander, so dass die Identifikationseinrichtung 46 eines anderen Taststifts 20, 20', 20", 20"' und eine andere Positionsmarkierungseinrichtung 62, 62', 62", 62'" ausgelesen werden kann.

Die dargestellte Schaltung ist natürlich lediglich schematisch zu verstehen, natürlich können auch andere Schaltungen und Kontakte vorgesehen sein, um bei einem Verschwenken des Tastkopfes 22" das Ausleseverhalten zu ändern. Auch die räumliche Anordnung der Taststifte 20, 20', 20", 20'" in den Figuren 4 und 5 ist lediglich beispielhaft zu verstehen, grundsätzlich kann auch ein anderer Aufbau gewählt sein.

## Patentansprüche

1. Taststift (20) für ein Koordinatenmeßgerät (10), mit einem ein erstes Ende (38) und ein zweites Ende (40) aufweisenden Schaft (36), einer Befestigungshülse (44) zum Befestigen des Taststifts (20) in einer Taststiftaufnahme (55), und einer Identifikationseinrichtung (46) zur Identifikation des Taststifts (20), wobei an dem ersten Ende (38) des Schafts (36) ein Tastobjekt (42) vorgesehen ist und wobei die Identifikationseinrichtung (46) über einen ersten Kontakt (50) und einen zweiten Kontakt (52) auslesbar ist,
**dadurch gekennzeichnet, dass**
das zweite Ende (40) des Schafts (36) und die Befestigungshülse (44) durch einen Kunststoffabschnitt (48) verbunden sind, wobei der erste Kontakt (50) mittels der Befestigungshülse (44) bereitgestellt ist und der zweite Kontakt (52) mittels einer rotationssymmetrischen, durch den Kunststoffabschnitt (48) von der Befestigungshülse (44) elektrisch isolierten Kontakteinrichtung (52) bereitgestellt ist.

2. Taststift nach Anspruch 1, **dadurch gekennzeichnet, dass** die Kontakteinrichtung (52) durch ein Schaftende (37) des Schafts (36) gebildet ist, wobei das Schaftende (37) den Kunststoffabschnitt (48) durchdringt.

3. Taststift nach Anspruch 1 oder 2, **dadurch gekennzeichnet, dass** der Kunststoffabschnitt (48) zumindest teilweise eine elektrisch leitende Beschichtung (66) aufweist, die die Kontakteinrichtung (52) bildet.

4. Taststift nach Anspruch 3, **dadurch gekennzeichnet, dass** die Beschichtung (66) ringförmig ausgebildet ist.

5. Taststift nach einem der Ansprüche 1 bis 4, **dadurch gekennzeichnet, dass** die Befestigungshülse (44) eine Gewindehülse ist.

6. Tastkopf (22) zur Aufnahme mindestens eines Taststifts (20) nach einem der Ansprüche 1 bis 5, mit mindestens einer Befestigungsgegeneinrichtung (54) zur Aufnahme der Befestigungshülse (44) des Taststifts (20), und mindestens einem jeweils einen ersten Gegenkontakt (56) und einen zweiten Gegenkontakt (58) aufweisenden Paar von Gegenkontakten (68),
**dadurch gekennzeichnet, dass**
der erste Gegenkontakt (56) durch die Befestigungsgegeneinrichtung (54) gebildet ist und der zweite Gegenkontakt (58) zur Kontaktierung der rotationssymmetrischen Kontakteinrichtung (52) des Taststifts (20) ausgebildet ist.

7. Tastkopf nach Anspruch 6, **dadurch gekennzeichnet, dass** der zweite Gegenkontakt (58) zur Kontaktierung der rotationssymmetrischen Kontakteinrichtung (52) des Taststifts (20) ein Federstift (60) ist.

8. Tastkopf nach Anspruch 6 oder 7, **dadurch gekennzeichnet, dass** der Tastkopf (22) zur Aufnahme von mehr als einem Taststift (20) ausgebildet ist und mehr als ein Paar von Gegenkontakten (68) vorgesehen ist, wobei jedem Paar von Gegenkontakten (68) eine Positionsmarkierungseinrichtung (62) zugeordnet ist, die zusammen mit einer jeweiligen Identifikationseinrichtung (46) eines Taststifts (20) auslesbar ist.

9. Tastkopf nach Anspruch 8, **dadurch gekennzeichnet, dass** ein Schalter (67) vorgesehen ist, um wahlweise eine Positionsmarkierungseinrichtung (62) und eine Idehtifikationseinrichtung (46) auszulesen.

10. Tastkopf nach Anspruch 8 oder 9, **dadurch gekennzeichnet, dass** die mindestens eine Befestigungsgegeneinrichtung (54) verschwenkbar ist, um wahlweise eine Positionsmarkierungseinrichtung (62) und eine Identifikationseinrichtung (46) auszulesen.

## Claims

1. A feeler pin (20) for a coordinate measuring machine (10), the feeler pin (20) comprising a shaft (36) having a first end (38) and a second end (40), a fastening sleeve (44) for fastening the feeler pin (20) in a feeler pin holder (55), and an identification device (46) for identifying the feeler pin (20), a feeler object (42) being provided at the first end (38) of the shaft (36), and wherein the identification device (46) can be read out via a first contact (50) and a second contact (52),
**characterized in that**
the second end (40) of the shaft (36) and the fastening sleeve (44) are connected by a plastic section (48), the first contact (50) being provided by the fastening sleeve (44), and the second contact (52) being provided by a rotationally symmetrical contact device (52) which is electrically insulated from the fastening sleeve (44) by the plastic section (48).

2. The feeler pin according to claim 1, **characterized in that** the contact device (52) is formed by a shaft end (37) of the shaft (36), the shaft end (37) penetrating the plastic section (48).

3. The feeler pin according to claim 1 or 2, **characterized in that** the plastic section (48) has at least partially an electrically conductive coating (66) which forms the contact device (52).

4. The feeler pin according to claim 3, **characterized in that** the coating (66) is of annular design.

5. The feeler pin according to one of claims 1 to 4, **characterized in that** the fastening sleeve (44) is a threaded sleeve.

6. Feeler head (22) for holding at least one feeler pin (20) according to any of claims 1 to 5, the feeler head (22) comprising at least one mating fastening device (54) for holding the fastening sleeve (44) of the feeler pin (20), and at least one pair of mating contacts (68) which each has a first mating contact (56) and a second mating contact (58),
**characterized in that**
the first mating contact (56) is formed by the mating fastening device (54), and the second mating contact (58) is designed to make contact with the rotationally symmetrical contact device (52) of the feeler pin (20).

7. The feeler head according to claim 6, **characterized in that** the second mating contact (58) for making contact with the rotationally symmetrical contact device (52) of the feeler pin (20) is a spring pin (60).

8. The feeler head according to claim 6 or 7, **characterized in that** the feeler head (22) is designed to hold more than one feeler pin (20), and more than one pair of mating contacts (68) is provided, each pair of mating contacts (68) being assigned a position marking device (62) which can be read out together with a respective identification device (46) of a feeler pin (20).

9. The feeler head according to claim 8, **characterized in that** a switch (67) is provided for selectively reading out a position marking device (62) and an identification device (46).

10. The feeler head according to claim 8 or 9, **characterized in that** the at least one mating fastening device (54) can be swivelled in order to selectively read out a position marking device (62) and an identification device (46).

## Revendications

1. Palpeur (20) pour un instrument de mesure de coordonnées (10) avec une tige (36) comportant une première extrémité (38) et une deuxième extrémité (40), une douille de fixation (44) pour fixer le palpeur (20) dans un logement pour palpeur (55) et un dispositif d'identification (46) pour l'identification du palpeur (20), sur la première extrémité (38) de la tige (36) étant prévu un objet à palper (42) et le dispositif d'identification (46) pouvant être lu par l'intermédiaire d'un premier contact (50) et d'un deuxième contact (52), **caractérisé en ce que** la deuxième extrémité (40) de la tige (36) et la douille de fixation (44) sont reliées par un tronçon en matière plastique (48), le premier contact (50) étant mis à disposition au moyen de la douille de fixation (44) et le deuxième contact (52) étant mis à disposition au moyen d'un dispositif de contact (52) symétrique en rotation, isolé électriquement de la douille de fixation (44) par le tronçon en matière plastique (48).

2. Palpeur selon la revendication 1, **caractérisé en ce que** le dispositif de contact (52) est formé par une extrémité de tige (37) de la tige (36), l'extrémité de tige (37) traversant le tronçon en matière plastique (48).

3. Palpeur selon la revendication 1 ou 2, **caractérisé en ce que** le tronçon en matière plastique (48) comporte au moins en partie un revêtement (66) conducteur d'électricité qui forme le dispositif de contact (52).

4. Palpeur selon la revendication 3, **caractérisé en ce que** le revêtement (66) est conçu sous forme annulaire.

5. Palpeur selon l'une quelconque des revendications 1 à 4, **caractérisé en ce que** la douille de fixation (44) est une douille filetée.

6. Tête de palpage (22) destinée à recevoir au moins un palpeur (20) selon l'une quelconque des revendications 1 à 5, avec au moins un contre-dispositif de fixation (54) pour recevoir la douille de fixation (44) du palpeur (20) et avec au moins une paire de contacts antagonistes (68) comportant chacune un premier contact antagoniste (56) et un deuxième contact antagoniste (58), **caractérisée en ce que** le premier contact antagoniste (56) est formé par le contre-dispositif de fixation (54) et le deuxième contact antagoniste (58) est conçu pour la mise en contact avec le dispositif de contact (52) symétrique en rotation du palpeur (20).

7. Tête de palpage selon la revendication 6, **caractérisée en ce que** le deuxième contact antagoniste (58) pour la mise en contact avec le dispositif de contact (52) symétrique en rotation du palpeur (20) est une tige à ressort (60).

8. Tête de palpage selon la revendication 6 ou 7, **caractérisée en ce que** la tête de palpage (22) est conçue pour recevoir plus d'un palpeur (20) et qu'il est prévu plus d'une paire de contacts antagonistes (68), à chaque paire de contacts antagonistes (68) étant associé un système de marquage de position (62), qui peut être lu conjointement avec un dispositif d'identification (46) respectif d'un palpeur (20).

9. Tête de palpage selon la revendication 8, **caractérisée en ce qu'**il est prévu un interrupteur (67) pour lire au choix un système de marquage de position (62) et un dispositif d'identification (46).

10. Tête de palpage selon la revendication 8 ou 9, **caractérisée en ce que** l'au moins un dispositif de fixation (54) peut se pivoter pour lire au choix un système de marquage de position (62) et un dispositif d'identification (46).
